# DEMANDE DE BREVET EUROPEEN

(11) **EP 1 950 936 A1**
(43) Date de publication de la demande: **30.07.2008**
(21) Numéro de dépôt: 07354064.3
(22) Date de dépôt: 29.11.2007
(51) Int. Cl.: H04M 1/02, H04M 1/725

(54) **Téléphone mobile multimédia multifonctionnel en deux parties**

(30) Priorité: 24.01.2007 FR 0700471
(71) Demandeur: LMQTECH SARL, 38000 Grenoble (FR)
(72) Inventeur: Mary, Luc, 38000 Grenoble (FR)
(74) Mandataire: Jouvray, Marie-Andrée

(57) **Abrégé**

Le téléphone multimédia en deux parties comporte un combiné téléphonique (1) dont les composants sont optimisés pour de la téléphonie et aptes à commander une unité mobile (8) qui regroupe toutes les fonctionnalités multimédia. Cette répartition permet d'optimiser techniquement, économiquement et ergonomiquement chaque partie de façon indépendante et la batterie du combiné (1), qui sert alors principalement à téléphoner.

## Description

### Domaine technique de l'invention

L'invention est relative à un téléphone mobile multimédia multifonctionnel, comportant une unité mobile et au moins un combiné téléphonique, le combiné comportant au moins un écouteur, un microphone, un clavier, un écran, des premiers moyens d'émission/réception radioélectrique associés à des seconds moyens d'émission/réception radioélectrique de l'unité mobile, l'unité mobile comportant des moyens de connexion à des réseaux sans fil, une carte SIM ou UIM.

### État de la technique

Il existe des téléphones multimédias mobiles divisés en deux parties. La demande de brevet internationale WO 01 /22694 décrit un tel téléphone illustré à la figure 1. La première partie de ce téléphone est un combiné 1 comportant un écran 2, un clavier 3, un microphone 4, un haut parleur 5, un vibreur 6 et des cartes multimédias amovibles 7. La seconde partie du téléphone est constituée par une unité mobile 8 comportant des moyens de connexion 9 au réseau de l'opérateur mobile et une carte SIM 11 (« Subscriber Identification Module » en anglais). Les deux parties de l'appareil mobile sont reliées entre elle par un lien de connexion radio de basse puissance 10 (liaison sans fil) dans la bande de fréquence 2,4GHz. Ce type de connexion utilise des antennes intérieures réalisées sur les circuits imprimés du combiné et de l'unité mobile. De préférence, la connexion entre l'unité mobile 8 et le combiné 1 téléphonique est cryptée, par exemple par l'utilisation du protocole Bluetooth. L'unité mobile 8 peut comporter une interface de connexion avec un ordinateur. Le combiné mobile comporte des fonctionnalités multimédia comme la radio FM, un décodeur MP3, un navigateur Wap, etc. Une telle répartition en deux parties permet de protéger l'utilisateur des ondes à forte puissance de l'unité mobile 8, l'utilisateur n'étant pas obligé de placer cette dernière à son oreille pour téléphoner.

### Objet de l'invention

L'invention a pour objet un téléphone mobile multimédia multifonctionnel en deux parties, dont la répartition de fonctions est techniquement, économiquement et ergonomiquement optimisée. Cette répartition permet notamment une optimisation de la consommation d'énergie.

Ce but est atteint par le fait que l'écouteur et le microphone du combiné sont des transducteurs téléphoniques, de bande passante téléphonique de l'ordre de 3,3Khz, le clavier du combiné étant un clavier de téléphonie, la liaison radioélectrique entre le combiné et l'unité mobile ayant un débit de quelques centaines de kbps, et en ce que l'unité mobile comporte un écran et au moins un haut-parleur de qualité audio et/ou une sortie audio, de bande passante comprise entre 3,3 et 96 KHz, pour la restitution de contenus multimédia.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un téléphone mobile selon l'art antérieur.
La figure 2 illustre un mode de réalisation particulier d'un combiné téléphonique selon l'invention

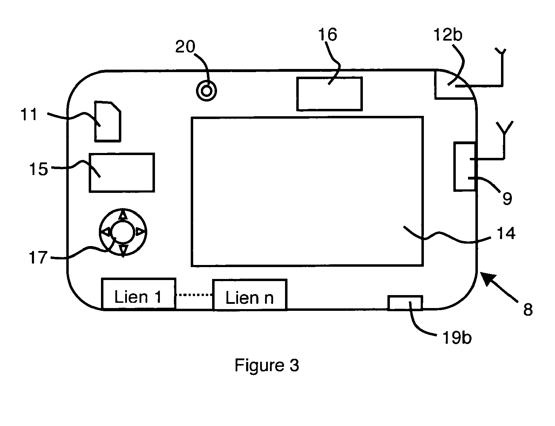

La figure 3 illustre un mode de réalisation particulier d'une unité mobile selon l'invention.

### Description de modes préférentiels de réalisation

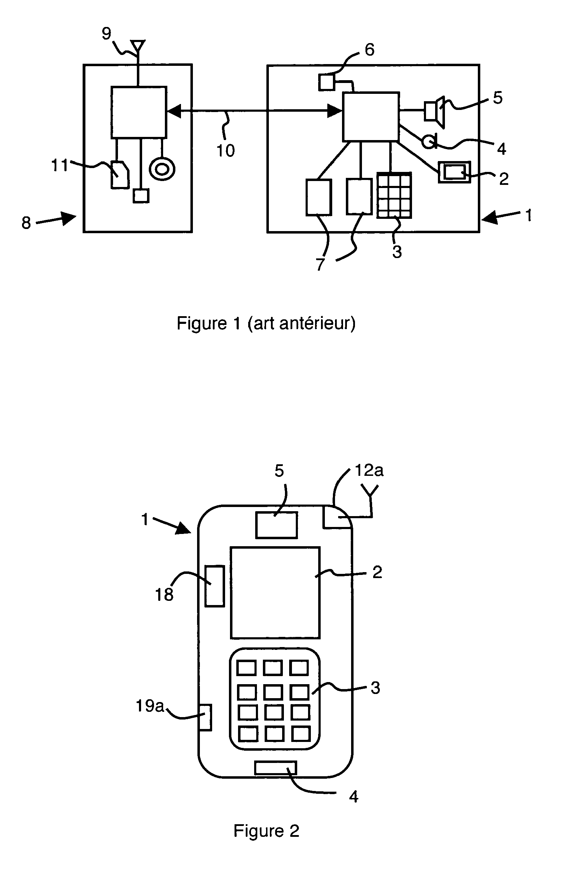

Le téléphone mobile multimédia multifonctionnel est divisé en deux parties, il comporte au moins un combiné 1 et une unité mobile 8. Le combiné 1, illustré à la figure 2, comporte au moins un écouteur 5, un microphone 4, un clavier 3, un écran 2 et des premiers moyens 12a d'émission/réception radioélectrique associés à des seconds moyens 12b d'émission/réception radioélectrique de l'unité mobile 8 et une batterie ou une pile (non représentée). Le clavier 3 du combiné 1 est un clavier de téléphonie, l'écouteur 5 et le microphone 4 du combiné 1 sont des transducteurs téléphoniques dont la bande passante est adaptée à la téléphonie, c'est-à-dire de l'ordre de 3,3kHz (« kilohertz »). L'unité mobile 8, illustrée à la figure 2, comporte des moyens de connexion 9 à des réseaux sans fil, ces réseau pouvant être de type WIFI (Wireless Fidelity, IEEE 802.11.b.g.n), bluetooth, cellulaire (2G, 3G), radiodiffusion (DVB, GPS), etc., et peut comporter des liens de connexion à des réseaux filaire externes (liens 1 à n), ces liens pouvant être de type ADSL, RJ45, USB, etc. L'unité mobile 8 comporte aussi une carte SIM ou UIM 11 (« Subscriber/User Identification Module »), un écran 14, au moins un haut-parleur 15 et/ou une sortie audio, et une batterie (non représentée). Le haut-parleur 15 et/ou la sortie audio de l'unité mobile 8 sont de qualité audio, c'est-à-dire qu'ils ont une bande passante comprise entre 3,3 et 96 KHz. L'écran 14 et le haut-parleur 15 et/ou la sortie audio permettent de restituer des informations et des contenus multimédia. Lorsque l'écran 14 est destiné à restituer des vidéos, il est dimensionné pour ne pas fatiguer la vue contrairement aux téléphones multifonctionnels existant.

Les divers éléments du combiné 1 sont classiquement connectés à au moins un circuit de traitement ou processeur (non représenté). Il en va de même dans l'unité mobile 8.

La liaison entre le combiné 1 et l'unité mobile 8 est une liaison sans fil radioélectrique, pouvant être sécurisée, réalisée par l'intermédiaire des moyens d'émission/réception radioélectrique 12a et 12b dont la puissance est de quelques milliwatts, alors que la puissance des moyens de connexion 9 à des réseaux sans fil de l'unité mobile 8 peut atteindre plusieurs Watts. La liaison entre l'unité mobile 8 et le combiné 1 a un débit faible adapté à la téléphonie, c'est-à-dire au plus de l'ordre de quelques centaines de kbps (« kilobit par seconde »), de préférence compris entre 64kbps et 104kbps pour la téléphonie, ce qui permet d'optimiser la batterie du combiné vis-à-vis de la consommation des moyens d'émission réception radioélectriques 12a et 12b.

Ainsi, le combiné 1 sert principalement à passer ou à recevoir des appels ou encore à commander à distance l'unité mobile 8, permettant d'optimiser la consommation d'énergie du combiné et de diminuer son épaisseur à quelques millimètres et son poids à moins de 50 grammes. Dans une variante, le combiné 1 est en permanence éteint lorsque son utilisation n'est pas requise et ne s'allume que sur action de l'utilisateur, par exemple lorsque l'unité mobile signale un appel et que l'utilisateur accepte le transfert au combiné. Une telle séparation permet, en répartissant judicieusement les fonctionnalités du téléphone mobile multimédia, une utilisation d'applications multimédia de l'unité mobile 8 même lorsque l'utilisateur est en communication téléphonique via le combiné 1, les fonctionnalités et applications multimédia fonctionnant indépendamment de la partie téléphonie. La batterie de l'unité mobile 8 est rechargée indépendamment de la batterie du combiné 1, le combiné 1 ayant une autonomie largement supérieure à celle de l'unité mobile 8.

Selon un mode de réalisation particulier, l'unité mobile 8 comporte des moyens de stockage 16, à titre d'exemple disque dur, mémoires flash, cartes mémoires amovibles, etc. Ces moyens de stockage 16 peuvent être non volatiles et stocker des fichiers multimédia. Les fonctionnalités multimédia, consommatrices d'énergie et localisées dans l'unité mobile 8, peuvent inclure, à titre d'exemple un baladeur audio apte à coder et décoder les flux audio, un baladeur vidéo apte à coder et décoder les flux vidéo afin de les afficher sur l'écran de l'unité mobile et, éventuellement, sur le combiné en faible résolution par l'intermédiaire de moyens de visualisation d'images et de vidéos petit format permettant d'adapter la taille des images ou des vidéos (quelques centaines de kbps en utilisant les moyens 12a et 12b), une caméra pour faire de la vidéo, de la vidéophonie ou prendre des photographies, un navigateur et une messagerie Internet, etc. L'unité mobile 8 peut intégrer une touche de commande multidirectionnelle 17 (« stick » en anglais) permettant l'utilisation des fonctionnalités multimédia et la navigation dans une interface homme/machine de l'unité mobile 8 lorsque le combiné 1 est en communication ou en l'absence de combiné 1. En variante, l'unité mobile ne comporte pas de touche multidirectionnelle 17 mais son écran 14 est tactile. Ainsi, l'unité mobile 8 est totalement indépendante du combiné.

En l'absence de combiné 1, l'unité mobile 8 peut effectuer, sur action d'un utilisateur, un appel d'urgence ou encore appeler un numéro enregistré dans un répertoire de l'unité mobile 8. Pour cela un microphone (non représenté) peut être intégré dans l'unité mobile. Dans une variante, au moins une partie des moyens d'appels d'urgence est reliée à des capteurs médicaux et/ou de chocs et établissent une connexion automatique, en fonction des données récoltées par les capteurs, vers un centre de secours prédéfini. Les données sont alors transmises au centre de secours ainsi qu'une position de l'unité mobile 8 par géolocalisation, ou par coordonnées satellite lorsque l'unité mobile 8 intègre un GPS. Ces données pouvant être transmises par le réseau cellulaire des opérateurs.

Selon un mode de réalisation particulier, le combiné 1 est associé à une unité mobile 8, via les moyens d'émission/réception 12a et 12b, par une liaison cryptée. L'association du combiné 1 avec l'unité mobile 8 est initiée par le combiné 1. Celui-ci demande à l'unité mobile 8 l'attribution d'une clé de cryptage exclusive. L'unité mobile 1 comporte des moyens de génération de clé de cryptage et génère alors aléatoirement une clé de cryptage puis envoie celle-ci au combiné 1. Le combiné 1 stocke alors la clé dans une mémoire 18, qui peut être de type non volatile (Flash par exemple), et l'unité mobile 8 stocke elle aussi cette clé dans ses moyens de stockage 16. Ainsi tous les échanges d'informations, d'instructions de commande et/ou les communications entre le combiné 1 et l'unité mobile 8 peuvent ensuite être sécurisés par cryptage. Les clés sont gardées en mémoire même en l'absence d'alimentation. Un combiné ayant obtenu et mémorisé une clé n'est utilisable avec aucune autre unité mobile que celle qui a généré la clé.

Le combiné 1 et l'unité mobile 8 peuvent comporter des connecteurs 19a et 19b. L'échange de la clé de cryptage peut alors se faire par contact direct entre l'unité mobile 8 et le combiné 1 par l'intermédiaire des connecteurs 19a et 19b. Ces connecteurs 19a et 19b peuvent aussi servir à recharger la batterie du combiné 1 ou à verrouiller mécaniquement le combiné 1 à l'unité mobile 8 lorsque ces derniers ne sont pas utilisés.

Dans une variante, le combiné peut aussi demander à l'unité mobile de réduire la puissance d'émission des seconds moyens d'émission/réception 12b de l'unité mobile 8 (mode à très faible puissance) avant d'envoyer la clé. Ainsi, l'échange de la clé ne peut se faire que lorsque le combiné 1 est à quelques centimètres de l'unité mobile 8, permettant de sécuriser l'envoi de cette clé afin que personne ne puisse l'intercepter. Dans le mode d'émission à très faible puissance, la distance maximum est de préférence inférieure à 5cm.

Plusieurs combinés 1, conçus par exemple dans des styles et couleurs différents, peuvent être associés à une même unité mobile 8. Chaque combiné 1 comporte alors une clé de cryptage distincte et exclusive, stockée dans sa mémoire 18. L'unité mobile 8 stocke dans ses moyens de stockage 16 chaque clé générée afin de pouvoir décoder les informations envoyées par le combiné associé.

En fonctionnement normal, la puissance des moyens d'émission/réception radioélectrique 12a et 12b est, de préférence, ajustée par des moyens d'ajustement de la portée d'émission de l'unité mobile 8 et du combiné 1 pour maintenir constant les niveaux de réception en fonction de la puissance des signaux reçus par le combiné 1 et/ou l'unité mobile 8, quelle que soit la distance séparant le combiné 1 de l'unité mobile 8, et ainsi optimiser l'autonomie de la batterie du combiné 1 et de l'unité mobile 8. Par exemple, la puissance d'émission de l'unité mobile 8 est ajustée en permanence en pour maintenir constant le niveau des signaux reçus par le combiné 1 qui retransmet la valeur de ces signaux à l'unité mobile 8. La distance effective entre le combiné 1 et l'unité mobile 8 est déduite de l'écart entre les niveaux émis par l'unité mobile 8 et ceux qui sont reçus par le combiné 1. Cette distance peut être affichée sur les écrans respectifs de l'unité mobile 8 ou du combiné 1.

L'unité mobile 8 peut comporter des moyens de réglage de la distance maximale séparant l'unité mobile du combiné. Ce réglage est effectué par l'intermédiaire du combiné 1. Ainsi, l'unité mobile peut notifier l'utilisateur lorsque le combiné 1 sort du périmètre ainsi défini.

Dans une variante, l'unité mobile 8 comporte une caméra vidéo 20 permettant de prendre des photos ou des films (audio et vidéo) et de les stocker sur les moyens de stockage 16, ainsi que de passer des appels par vidéophonie. Les données stockées sur les moyens de stockage 16 pouvant être partagées lorsque l'unité mobile est reliée à des liens de connexion filaire (liens 1 à n) ou à des moyens de connexion 9 à des réseaux sans fil.

L'unité mobile peut également comporter des moyens de paiement compatibles avec les protocoles NFC, FeliCa et leurs variantes. L'unité mobile peut alors servir de portefeuille virtuel dont le fonctionnement et la manipulation sont indépendants de ceux du combiné téléphonique.

Le combiné peut également comporter des moyens de pointage tels que des détecteurs optique de mesure de déplacement sur une surface, une boule de défilement, ou encore un pavé tactile (« touchpad » en anglais) et ainsi servir de souris sans fil à l'unité mobile 8 par l'intermédiaire des moyens d'émission/réception 12a, 12b. L'écouteur et le microphone du combiné 1 peuvent se trouver sur une face opposée ou différente des moyens de pointage, ainsi un utilisateur peut simultanément téléphoner et commander l'unité mobile en passant son doigt sur les moyens de pointage.

L'unité mobile 8 peut être conçue comme un ordinateur de poche ou un assistant numérique. Elle comporte alors un clavier et un écran dimensionné ergonomiquement pour cet usage et permet, entre autres, de partager des fichiers en temps réel avec un interlocuteur distant sur un lien de connexion filaire ou un des moyens de connexion 9 tout en ayant une conversation téléphonique.

L'unité mobile 8 peut être munie d'un bracelet ou d'une agrafe, permettant d'attacher l'unité mobile 8 à une partie du corps, un vêtement ou à un accessoire.

Le téléphone mobile selon l'invention permet d'utiliser la partie multimédia du téléphone, disposée dans l'unité mobile tout en ayant une communication téléphonique. Cette répartition permet de réduire le poids, l'épaisseur et la dissipation thermique du combiné 1. L'autonomie de la batterie ou de la pile du combiné 1 est largement supérieure à celle de l'unité mobile 8. En effet, le combiné 1 reste un élément à très basse consommation d'énergie. L'unité mobile 8 est dimensionnée pour que toutes les fonctionnalités multimédia soient utilisables avec aisance et sans fatigue, ce dimensionnement permet de placer dans l'unité mobile une batterie adaptée à la consommation des composants multimédia. Par ailleurs, la séparation du combiné et de l'unité mobile permet d'éviter à l'utilisateur une exposition à des radiations trop élevées générées par les moyens de connexion 9. De plus le combiné 1 est un élément dont la valeur est faible comparé à l'unité mobile 8. Le combiné 1 peut facilement être changé en cas de casse, de vol ou pour des raisons esthétiques.

## Revendications

1. Téléphone mobile multimédia multifonctionnel, comportant une unité mobile (8) et au moins un combiné téléphonique (1), le combiné (1) comportant au moins un écouteur (5), un microphone (4), un clavier (3), un écran (2), des premiers moyens d'émission/réception radioélectrique (12a) associés à des seconds moyens d'émission/réception radioélectrique (12b) de l'unité mobile (8), l'unité mobile (8) comportant des moyens de connexion (9) à des réseaux sans fil, une carte SIM ou UIM (11), téléphone mobile **caractérisé en ce que** l'écouteur (5) et le microphone (4) du combiné (1) sont des transducteurs téléphoniques, de bande passante téléphonique de l'ordre de 3,3Khz, le clavier (3) du combiné (1) étant un clavier de téléphonie, la liaison radioélectrique entre le combiné (1) et l'unité mobile (8) ayant un débit de quelques centaines de kbps, et **en ce que** l'unité mobile (8) comporte un écran (14) et au moins un haut-parleur (15) de qualité audio et/ou une sortie audio, de bande passante comprise entre 3,3 et 96 KHz, pour la restitution de contenus multimédia ou d'information.

2. Téléphone mobile selon la revendication 1 **caractérisé en ce que** les échanges d'information de commande entre le combiné (1) et l'unité mobile (8) se font de manière sécurisée par des clés de cryptage, l'unité mobile (8) comportant des moyens de génération de clés aléatoires, sur demande du combiné (1), les clés étant stockées sur le combiné dans une mémoire (18) et sur l'unité mobile dans des moyens de stockage (16).

3. Téléphone mobile selon la revendication 2 **caractérisé en ce que** les seconds moyens d'émission/réception (12b) comportent un mode d'émission sur une distance de quelques centimètres pour échanger les clés de cryptage.

4. Téléphone mobile selon la revendication 2 **caractérisé en ce que** l'unité mobile (8) et le combiné (1) comportent des connecteurs (19a,19b) mis en contact pour l'échange des clés de cryptage ou la recharge de la batterie du combiné (1).

5. Téléphone mobile selon l'une quelconque des revendications 1 à 4, **caractérisé en ce que** plusieurs combinés (1) sont associés à une même unité mobile (8), chaque combiné comportant une clé de cryptage distincte et exclusive stockée dans la mémoire 18 du combiné.

6. Téléphone mobile selon les revendications 1 à 5, **caractérisé en ce que** le combiné (1) comporte des moyens d'ajustement de la portée d'émission de l'unité mobile (8) et du combiné (1) pour maintenir constant les niveaux de réception.

7. Téléphone mobile selon l'une quelconque des revendications 1 à 6, **caractérisé en ce que** l'unité mobile (8) comporte des moyens d'appel d'urgence.

8. Téléphone mobile selon la revendication 7, **caractérisée en ce que** au moins une partie des moyens d'appel d'urgence de l'unité mobile (8) sont automatiques et reliés à des capteurs médicaux et/ou de choc.

9. Téléphone mobile selon l'une quelconque des revendications 1 à 8, **caractérisé en ce que** le combiné (1) comporte des moyens de visualisation d'image et de vidéo petit format.

10. Téléphone mobile selon l'une quelconque des revendications 1 à 9, **caractérisé en ce que** l'unité mobile (8) comporte une touche de commande multidirectionnelle (17) ou un écran tactile.

11. Téléphone mobile selon l'une quelconque des revendications 1 à 10, **caractérisé en ce que** le combiné (1) comporte des moyens de pointage de l'unité mobile (8).
